(19) **Europäisches Patentamt**

**European Patent Office**

**Office européen des brevets**

(11) **EP 0 868 727 B1**

(12) **EUROPÄISCHE PATENTSCHRIFT**

(45) Veröffentlichungstag und Bekanntmachung des Hinweises auf die Patenterteilung:
**05.04.2000 Patentblatt 2000/14**

(51) Int Cl.⁷: **G21C 17/108**

(21) Anmeldenummer: **96944581.6**

(86) Internationale Anmeldenummer:
**PCT/EP96/05656**

(22) Anmeldetag: **16.12.1996**

(87) Internationale Veröffentlichungsnummer:
**WO 97/23879 (03.07.1997 Gazette 1997/29)**

(54) **VERFAHREN UND VORRICHTUNG ZUR BESTIMMUNG DER NEUTRONENFLUSSDICHTE, INSBESONDERE IN EINER KERNKRAFTANLAGE**

PROCESS AND DEVICE FOR DETERMINING NEUTRON FLUX DENSITY, IN PARTICULAR IN A NUCLEAR POWER FACILITY

PROCEDE ET DISPOSITIF POUR LA DETERMINATION DE LA DENSITE DE FLUX DE NEUTRONS, EN PARTICULIER DANS UNE CENTRALE NUCLEAIRE

(84) Benannte Vertragsstaaten:
**DE ES FI FR SE**

(30) Priorität: **22.12.1995 DE 19548516**

(43) Veröffentlichungstag der Anmeldung:
**07.10.1998 Patentblatt 1998/41**

(73) Patentinhaber: **SIEMENS AKTIENGESELLSCHAFT 80333 München (DE)**

(72) Erfinder:
• KIEL, Peter
  D-63654 Büdingen (DE)
• KRIEN, Konrad
  D-91054 Erlangen (DE)

(56) Entgegenhaltungen:
US-A- 4 637 913    US-A- 4 652 419
US-A- 5 015 434    US-A- 5 225 149

**Beschreibung**

Die Erfindung betrifft ein Verfahren sowie eine Vorrichtung zur Bestimmung der Neutronenflußdichte einer Neutronen aussendenden Quelle, insbesondere des eine Mehrzahl von Brennelementen umfassenden Reaktorkerns einer Kernkraftanlage.

Bei einer Kernkraftanlage wird häufig zur Überwachung von An- und Abfahrvorgängen eine Vorrichtung zur Bestimmung der Neutronenflußdichte, ein sogenanntes Neutronenmeßsystem, eingesetzt. Dieses weist Neutronendetektoren auf, die insbesondere ein der Neutronenflußdichte proportionales Signal liefern. Die Neutronenflußdichte im abgeschalteten unterkritischen Zustand einer Kernkraftanlage unterscheidet sich von der im Leistungsbetrieb der Kernkraftanlage um mehrere Zehnerpotenzen.

Das Buch "Strahlung und Strahlungsmeßtechnik in Kernkraftwerken", Herausgeber Elmar Schrüfer, Elitera Verlag, Berlin, 1974, behandelt ausführlich Aufbau und Wirkungsweise von Neutronendetektoren, insbesondere in den Abschnitten 3.4, 6.1 und 6.2. Wie in Abschnitt 6.1 beschrieben, dienen Neutronenflußmeßsysteme mit Neutronendetektoren der Bestimmung der Reaktorleistung einer Kernkraftanlage. Ein Neutronendetektor kann dabei sowohl außerhalb als auch innerhalb des Reaktorkerns zwischen benachbarten Brennelementen angeordnet sein. Der Neutronendetektor kann so ausgestaltet sein, daß er entlang einer Hauptachse verschieblich ist. Er kann somit während des regulären Leistungsbetriebes der Kernkraftanlage aus dem Reaktorkern herausfahrbar sein.

Hinsichtlich der Wirkungsweise und Meßgenauigkeit werden drei unterschiedliche Systeme von Neutronendetektoren unterschieden. Bei einer Siedewasser-Kernkraftanlage werden sogenannte Impulssysteme vorzugsweise dort angewandt, wo eine hohe Empfindlichkeit bei einer starken Gammastrahlung erreicht werden soll. Da sich hierbei niedrige Impulsraten viel leichter messen lassen als sehr kleine Ströme, können durch die Impulssysteme auch noch niedrige Neutronenflußdichten gemessen werden. Die geringe Gamma-Impulshöhe gestattet eine Diskriminierung der Neutronen gegenüber der Gammastrahlung, beispielsweise durch Verwendung von Schwellwertdiskriminatoren. Der Einsatzbereich eines Impulssystems erstreckt sich auf Neutronenflußdichten in einem Bereich von etwa $10^{-1}$ Neutronen/ (cm$^2$·s) bis auf etwa $10^5$ Neutronen/ (cm$^2$·s) Dies entspricht einer Reaktorleistung von bis zu etwa $10^{-3}$ %.

Sogenannte Gleichstromsysteme eignen sich vorzugsweise für mittlere und hohe Neutronenflüsse in einem Bereich von etwa $10^2$ Neutronen/(cm$^2$·s) bis etwa $10^9$ Neutronen/(cm$^2$·s). Eine Diskriminierung der Neutronen gegenüber der Gamma-Strahlung erfolgt vorzugsweise über sogenannte Gamma-kompensierte Ionisationskammern. Bei kleinen Neutronenflüssen wird der Einsatz eines Gleichstromsystems in der Regel durch den Einfluß der Gamma-Strahlung begrenzt. Ein Neutronendetektor eines Gleichstromsystems basiert vorzugsweise auf einer Spalt- und/oder Borkammer, wie sie beispielsweise in Abschnitt 3.4 des obigen Buches beschrieben sind.

Beim sogenannten Wechselstromsystem wird der in einer Spalt-, Ionisations- oder Borkammer erzeugte, dem Gleichstrom überlagerte Wechselstrom zur Informationsbildung herangezogen. Aufgrund der hohen Ionisationsrate des Gases einer solchen Kammer sind die einzelnen Impulse des ionisierten Gases nicht mehr getrennt auflösbar. Hierdurch wird im Mittel ein Gleichstrom erzeugt, dem ein Wechselstrom überlagert ist. Der quadratische Mittelwert des Wechselstromsignals ist, wie auch der Gleichstrom, direkt proportional der Neutronenflußdichte. Gegenüber einem Gleichstromsystem kann bei einem Wechselstromsystem das Verhältnis des Signals von detektierten Neutronen zu dem durch Gammastrahlung verursachten Signal um einen Faktor 1000 höher liegen. Ein Wechselstromsystem eignet sich daher vorzugsweise für einen Bereich mittlerer sowie hoher Reaktorleistung mit Neutronenflußdichten zwischen $10^6$ Neutronen/(cm$^2$·s) und $10^{14}$ Neutronen/(cm$^2$·s). Ein Wechselstromsystem eignet sich somit auch für den Leistungsbereich einer Kernkraftanlage.

Aufgabe der Erfindung ist es, ein Verfahren anzugeben, bei welchem über unterschiedliche Meßsignale einfach und sicher über einen großen Bereich die Neutronenflußdichte, insbesondere aus dem abgeschalteten in den normalen Leistungsbereich einer Kernkraftanlage hinein, bestimmt wird. Eine weitere Aufgabe der Erfindung ist es, eine Vorrichtung zur Bestimmung der Neutronenflußdichte einer Neutronen aussendenden Quelle, insbesondere in einer Kernkraftanlage, anzugeben.

Erfindungsgemäß wird die auf ein Verfahren zur Bestimmung der Neutronenflußdichte einer neutronenaussendenden Quelle gerichtete Aufgabe durch die Merkmale des Anspruchs 1 gelöst. Dabei ist vorgesehen, daß ein erstes Meßsignal und ein zweites Meßsignal, die voneinander verschieden und jeweils von der Neutronenflußdichte abhängig sind, zur Bildung eines eindeutig von der Neutronenflußdichte abhängenden Weitbereichssignals verwendet werden, wobei das erste Meßsignal bis zu Werten der Neutronenflußdichte kleiner als eine erste Grenzflußdichte eine monotone Funktion der Neutronenflußdichte ist, das Weitbereichssignal dem ersten Meßsignal gleichgesetzt wird für Werte des ersten Meßsignals, die einer Neutronenflußdichte kleiner als einem unteren Grenzwert entsprechen, der wiederum kleiner als die erste Grenzflußdichte ist, und das Weitbereichssignal bei Werten des ersten Meßsignals, die einer Neutronenflußdichte größer als dem unteren Grenzwert entsprechen, als Funktion des zweiten Meßsignals und des ersten Meßsignals so gebildet werden, daß das Weitbereichssignal an dem unteren Grenzwert stetig ist und das Weitbereichssignal als Grundlage der Bestimmung der Neutronenflußdichte dient.

Wegen der eindeutigen Abhängigkeit des Weitbereichsmeßsignals von der Neutronenflußdichte ist bei einer Kernkraftanlage die Leistung des Reaktors der Kernkraftanlage ermittelbar. Dies gilt insbesondere für eine Kernkraftanlage mit einem Siedewasser- oder einem Druckwasserreaktor. Hierbei ist dem unteren Grenzwert sowie der ersten Grenzflußdichte der Neutronenflußdichte jeweils eindeutig ein Wert des ersten Meßsignals zugeordnet, so daß anstelle des Wertes der Neutronenflußdichte immer auch der zugeordnete Wert des ersten Meßsignals verwendet werden kann. Der dem unteren Grenzwert zugeordnete erste Signalwert des ersten Meßsignals kann somit bei Durchführung des Verfahrens als Grenzwert dienen, bis zu dem das Weitbereichssignal aus dem ersten Meßsignal gebildet wird. Bei Werten des ersten Meßsignals größer als der erste Signalwert wird das Weitbereichssignal als eine Funktion des ersten Meßsignals und des zweiten Meßsignals gebildet. Diese Funktion hängt so von dem ersten und zweiten Meßsignal ab, daß sie bei Gleichheit des Wertes des ersten Meßsignals mit dem ersten Signalwert gerade dem ersten Signalwert entspricht. Hierdurch ist gewährleistet, daß unabhängig von der Wahl des ersten Signalwertes, d.h. des unteren Grenzwertes der Neutronenflußdichte, das Weitbereichssignal auf alle Fälle stetig verläuft.

Vorzugsweise ist das zweite Meßsignal bei Werten der Neutronenflußdichte, die größer als eine zweite Grenzflußdichte sind, welche zweite Grenzflußdichte kleiner als die erste Grenzflußdichte ist, eine monotone Funktion der Neutronenflußdichte. Bei dem Verfahren wird ein Überlappungsbereich verwendet, der zwischen dem unteren Grenzwert und einem oberen Grenzwert bestimmt wird, wobei der obere Grenzwert der Neutronenflußdichte größer ist als die zweite Grenzflußdichte. Hierdurch ist gewährleistet, daß in dem Überlappungsbereich in einem durch die erste und zweite Grenzflußdichte definierten Intervall sowohl das erste Meßsignal als auch das zweite Meßsignal eine jeweilige monotone Funktion der Neutronenflußdichte ist. Vorzugsweise sind beide Meßsignale monoton steigend oder beide monoton fallend. Hierdurch ist auf einfache Art und Weise die eindeutige Abhängigkeit des Weitbereichssignals von der Neutronenflußdichte auch im Überlappungsbereich gewährleistet. Aufgrund der Monotonie des ersten Meßsignals bei Neutronenflußdichten unterhalb der ersten Grenzflußdichte und der Monotonie des zweiten Meßsignals bei Neutronenflußdichten oberhalb der zweiten Grenzflußdichte ist der Überlappungsbereich auch eindeutig durch den ersten Signalwert des ersten Meßsignals und den zweiten Signalwert des zweiten Meßsignals definiert. Somit kann ohne Kenntnis der Neutronenflußdichte alleine anhand der Werte des ersten Meßsignals und des zweiten Meßsignals eine Bestimmung der Bereiche erfolgen, in denen das Weitbereichssignal dem ersten Meßsignal gleichgesetzt wird oder als eine Funktion des ersten Meßsignals und des zweiten Meßsignals gebildet wird. Dies ist unabhängig davon, ob das erste Meßsignal und das zweite Meßsignal monoton steigend oder monoton fallend verlaufen.

Es versteht sich, daß analog zu der Bestimmung des Überlappungsbereichs mit monotonem Weitbereichssignal als Funktion des ersten Meßsignals und des zweiten Meßsignals ein weiterer Überlappungsbereich bestimmt werden kann. In einem solchen weiteren Überlappungsbereich, der sich zu kleineren oder größeren Werten der Neutronenflußdichte an den erstgenannten Überlappungsbereich anschließt, kann das Weitbereichssignal aus einem dritten Meßsignal und dem ersten oder dem zweiten Meßsignal zusammengesetzt werden, so daß ein stetiger Übergang des Weitbereichssignals an den Bereichgrenzen des weiteren Überlappungsbereichs analog zum erstgenannten Überlappungsbereich gegeben ist.

Vor allem in Kernkraftanlagen, bei denen das Weitbereichssignal auch in das Sicherheitssystem der Kernkraftanlage eingespeist wird, ist das Verfahren von besonderem Vorteil, da das Sicherheitssystem als auslösendes Kriterium für eine Schnellabschaltung der Kernkraftanlage eine schnelle oder unerwartete Änderung der Neutronenflußdichte oder der Reaktorleistung beinhalten kann, die beide durch das Weitbereichssignal erkennbar sind. Eine Unstetigkeit in dem Weitbereichssignal könnte unter Umständen zu einer unbegründeten Schnellabschaltung der Kernkraftanlage führen. Dies ist hier durch das Verfahren infolge der angegebenen Bestimmung des Weitbereichssignals von vornherein vermieden.

Vorzugsweise ist das Weitbereichssignal bei Werten des zweiten Meßsignals, denen eine Neutronenflußdichte größer als der obere Grenzwert zugeordnet ist, dem zweiten Meßsignal gleichgesetzt. Das Weitbereichssignal ist somit eine bereichsweise definierte Funktion, die in drei jeweils unmittelbar aneinander grenzenden Bereichen unterschiedlich definiert ist. Lediglich in dem Überlappungsbereich ist es eine Funktion sowohl des ersten Meßsignals als auch des zweiten Meßsignals, wobei an den Bereichsgrenzen des Überlappungsbereiches ein stetiger Übergang gewährleistet ist.

Wie bereits erwähnt, kann das Weitbereichssignal auch in vier oder mehr Bereichen unterschiedlich definiert sein, wobei allerdings an jeder Bereichsgrenze ein stetiger Übergang des Weitbereichsignals und in jedem Bereich eine Monotonie des Weitbereichsignals gegeben sein soll.

Diese stetigen Übergänge werden vorzugsweise durch eine Funktion gewährleistet, die aufgrund ihrer Zusammensetzung aus dem ersten Meßsignal und dem zweiten Meßsignal an dem unteren Grenzwert mit dem ersten Meßsignal und an dem oberen Grenzwert mit dem zweiten Meßsignal zusammenfällt. An den Bereichsgrenzen und außerhalb des Überlappungsbereiches ist die Funktion somit immer nur von einem einzigen Meßsignal abhängig, und zwar von dem Meßsignal, welches außerhalb des Überlappungsbereiches bis zu dem jeweiligen Grenzwert eine monotone Funktion der Neutronenflußdichte ist. Die Funktion wird innerhalb des Überlappungsbereichs vorzugsweise gebildet als eine Summe aus dem Produkt des ersten Meßsignals mit einem von dem zweiten Meßsignal abhängenden Faktor und dem Produkt aus dem zweiten Meßsignal mit einem von dem ersten Meßsignal abhängenden Faktor. Der von dem zweiten Meßsignal abhängende Faktor wird so gebildet, daß er den Wert Null annimmt, wenn das zweite Meßsignal dem zweiten Signalwert entspricht, d.h. wenn der obere Grenzwert der Neutronenflußdichte des Überlappungsbereiches vorliegt. Der von dem ersten Meßsignal abhängende Faktor ist analog so definiert, daß er zu Null wird, falls das erste Meßsignal den ersten Signalwert annimmt, d.h. wenn der untere Grenzwert des Überlappungsbereiches vorliegt. Der von dem zweiten Meßsignal abhängende Faktor ist vorzugsweise der Quotient aus der Differenz aus dem zweiten Signalwert und dem zweiten Meßsignal und der Differenz aus dem zweiten Signalwert und dem ersten Signalwert; der von dem ersten Meßsignal abhängende Faktor ist entsprechend der Quotient aus der Differenz aus erstem Meßsignal und erstem Signalwert und der Differenz aus dem zweiten Signalwert und dem ersten Signalwert.

Vorzugsweise ist das Weitbereichssignal eine monoton steigende Funktion der Neutronenflußdichte. Dies liegt beispielsweise dann vor, wenn als Meßsignale solche eines Neutronenmeßsystems, welches eine Ionationskammer, eine Spaltkammer, eine Borkammer, einen sogenannten "self powered neutron"-Detektor (SPN-Detektor) oder ein Zählrohr aufweist, ohne eine Umrechnung oder Konvertierung verwendet werden.

Das erste Meßsignal sowie das zweite Meßsignal werden vorzugsweise in einer Ionisationskammer, einer Spaltkammer, einer Borkammer, einem SPN-Detektor oder einem Zählrohr erzeugt, wobei durchaus beide Meßsignale in derselben Kammer oder in demselben Zählrohr erzeugt werden können. Der Aufbau sowie die Wirkungsweise eines Neutronendetektors zur Erzeugung eines Meßsignals, welches insbesondere proportional zur Neutronenflußdichte ist, ist beispielsweise in dem deutschen Gebrauchsmuster G 93 05 956.6 sowie in dem Buch "Radiation Detection and Measurement" von Glenn F. Knoll, John Wiley & Sons, New York, 2. Auflage, 1985, insbesondere Kapitel 5 und 14, beschrieben. Hierbei handelt es sich insbesondere um einen Neutronendetektor mit einer Spaltkammer oder einer Borkammer, welche so kompakt ausgeführt sind, daß sie für den Einsatz innerhalb eines Reaktors, d.h. für die sogenannte Inkern-Instrumentierung, geeignet sind.

Das erste Meßsignal ist vorzugsweise das sogenannte Impulssignal einer Ionisationskammer, welches durch von Neutronen ionisierten Gasatomen bzw. Gasmolekülen erzeugt wird. Ein Impulssignal zeichnet sich dadurch aus, daß es besonders bei niedrigen Neutronenflußdichte von unter $10^5$ Neutronen/(cm$^2$·s) ein besonders gutes und von anderen radioaktiven Strahlungen, insbesondere Gamma-Strahlung, eindeutig unterscheidbares Meßsignal ist. Das Impulssignal ist bei kleinen Neutronenflußdichten proportional der Neutronenflußdichte.

Das zweite Meßsignal ist vorzugsweise ein Gleichstrom- oder Wechselstromsignal derselben Ionisationskammer. Das Stromsignal ist bei hohen Neutronenflußdichten, bei denen einzelne Impulse der ionisierten Gasatome oder Gasmoleküle nicht mehr scharf voneinander trennbar sind, ein der Neutronenflußdichte proportionales Meßsignal. Aus dem Stromsignal können Neutronenflußdichten von etwa $10^3$ Neutronen/(cm$^2$·s) bis etwa $10^{10}$ Neutronen/(cm$^2$·s) sicher erfaßt werden.

In dem in einer Ionisationskammer durch die ionisierten Gasatome bzw. Gasmoleküle erzeugten Strom ist durch die Fluktuation der Zahl der Impulse ein Wechselstromanteil enthalten. Durch Quadrierung und anschließende Mittelung dieses Wechselstromanteils wird ein Wechselstromsignal gewonnen, welches proportional der Neutronenflußdichte ist.

Vorzugsweise wird das Wechselstromsignal nach der sogenannten Kreuzkorrelationsmethode ermittelt, bei der sowohl von einer Innen- als auch einer Außenelektrode der Ionisationskammer jeweils ein Signal abgegriffen wird. Diese Signale unterscheiden sich in ihrer Polarität, sind aber sonst gleich. Aus ihnen wird eine Kreuzkorrelationsfunktion gebildet, die dem mittleren Quadrat des Wechselstromanteils und somit der Neutronenflußdichte proportional ist. Mit der Kreuzkorrelationsmethode können Einstreuung und statistische Störungen (Rauschen), die jeweils nur in einem der Signale enthalten sind, eliminiert werden.

Das so gebildete zweite Meßsignal ist direkt der Neutronenflußdichte proportional bis zu einer unteren Neutronenflußdichte von etwa $10^3$ Neutronen/(cm$^2$·s). Die maximal zu messende Neutronenflußdichte für das zweite Meßsignal liegt etwa bei $10^{10}$ Neutronen/(cm$^2$·s). Hierdurch ist die Neutronenflußdichte insbesondere einer Druckwasser-Kernkraftanlage in einem Bereich von $10^{-5}$ % bis 100 % der Reaktorleistung sicher erfaßbar. Obengesagtes gilt analog für eine Spaltkammer sowie für ein Zählrohr.

Vorzugsweise wird das Verfahren zur Bestimmung der Neutronenflußdichte in einer Kernkraftanlage verwendet. Hierbei ist die Neutronen aussendende Quelle der Reaktorkern der Kernkraftanlage mit einer Mehrzahl von Brennelementen, wobei die Neutronenflußdichte außerhalb des Reaktorkerns sowie durch die sogenannte Inkerninstrumentierung zwischen den Brennelementen innerhalb des Reaktorkerns bestimmt wird. Durch Erzeugung des Weitbereichssignals, welches eindeutig von der Neutronenflußdichte abhängt, ist die Bestimmung der Neutronenflußdichte während eines Anfahrvorgangs, eines Abfahrvorgangs oder des normalen Betriebes der Kernkraftanlage über den gesamten Leistungsbereich bestimmbar. Durch eine bereichsweise Definition des Weitbereichssignals derart, daß an den Bereichsgrenzen das Weitbereichssignal per Definition stetig übergeht, ist selbst bei Veränderungen innerhalb des Reaktorkerns, beispielsweise bei Abbrand der Brennelemente, oder bei Veränderungen der Neutronenmeßsysteme, beispielsweise durch Abbrand oder durch Material- oder Temperaturermüdung, die Erfassung der Neutronenflußdichten sicher gewährleistet.

Die auf eine Vorrichtung zur Bestimmung der Neutronenflußdichte einer Neutronen aussendenden Quelle gerichtete Aufgabe wird erfindungsgemäß durch eine Vorrichtung gelöst, welche eine Meßeinrichtung zur Übertragung und Erzeugung eines ersten und eines zweiten Meßsignals, die voneinander verschieden und jeweils von der Neutronenflußdichte abhängig sind, und eine Auswerteeinrichtung zur Bildung eines eindeutig von der Neutronenflußdichte abhängenden Weitbereichssignals aufweist. Das erste Meßsignal ist bei Werten der Neutronenflußdichte, die kleiner als eine erste Grenzflußdichte sind, eine monotone Funktion der Neutronenflußdichte, insbesondere monoton steigend. In der Auswerteeinrichtung erfolgt aus dem Weitbereichssignal die Bestimmung der Neutronenflußdichte. Das Weitbereichssignal ist hierbei mit dem ersten Meßsignal identisch, solange das erste Meßsignal kleiner oder größer als ein vorgegebener erster Signalwert ist, je nachdem ob das erste Meßsignal monoton steigend oder monoton fallend in Abhängigkeit der Neutronenflußdichte verläuft. Ist das erste Meßsignal größer als der erste Signalwert (monoton steigender Verlauf), so ist das Weitbereichssignal aus einer Funktion gebildet, die sowohl von dem ersten Meßsignal als auch von dem zweiten Meßsignal abhängt. Die Funktion hat die Eigenschaft, daß sie identisch mit dem ersten Meßsignal ist, falls dieses gerade den ersten Signalwert annimmt. Hierdurch ist ein stetiger Übergang des Weitbereichssignals an dem ersten Signalwert gegeben, und zwar unabhängig von dem Wert des zweiten Meßsignals und unabhängig von dem Verlauf des zweiten Meßsignals in Abhängigkeit der Neutronenflußdichte. Entsprechendes gilt bei einem Unterschreiten des ersten Signalwertes für den Fall, daß das erste Meßsignal monoton fallend in Abhängigkeit der Neutronenflußdichte verläuft. Eine entsprechende Stetigkeit gilt auch an einem Übergang, an dem das Weitbereichssignal durch eine andere Funktion aus einem oder mehreren, zumindest zwei, Meßsignalen gebildet wird. Zur Bestimmung der Neutronenflußdichte kann die Auswerteeinrichtung beispielsweise als Rechner mit Rechenprogramm oder als elektronische Schaltung realisiert sein.

Die Meßeinrichtung kann neben einem Neutronendetektor, einer Ionisationskammer, einer Spaltkammer, einer Borkammer, einem SPN-Detektor oder einem Zählrohr entsprechende elektrische Leitungen sowie Operationsverstärker aufweisen.

Anhand der Zeichnung werden beispielhaft das Verfahren und die Vorrichtung gemäß der Erfindung erläutert. Es zeigen:

FIG 1    schematisch in einem Längsschnitt den Sicherheitsbehälter einer Siedewasser-Kernkraftanlage mit einer nicht maßstäblich dargestellten Vorrichtung zur Bestimmung der Neutronenflußdichte und

FIG 2    den Verlauf eines Weitbereichssignals W zur Bestimmung der Neutronenflußdichte n der Siedewasser-Kernkraftanlage in Abhängigkeit von dieser Neutronenflußdichte n.

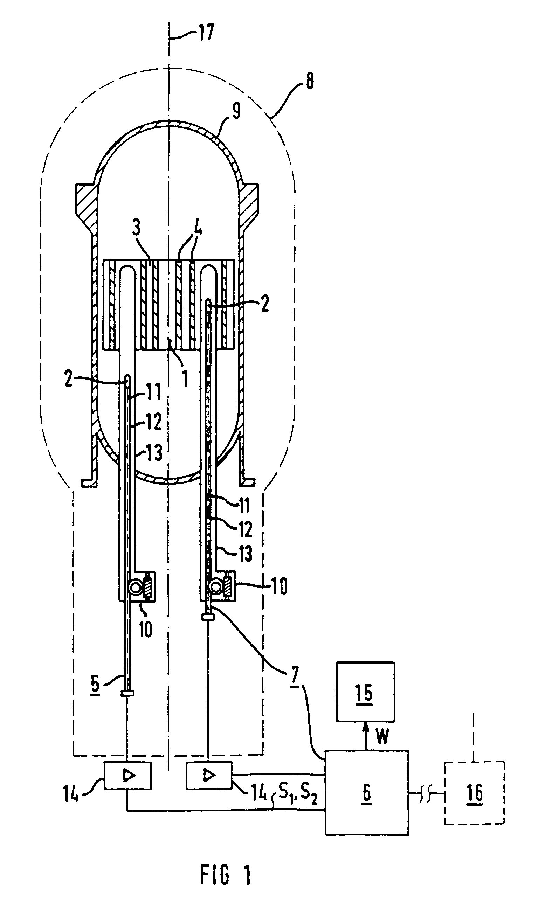

In FIG 1 ist schematisch und nicht maßstäblich in einem Längsschnitt der Sicherheitsbehälter 8 einer Siedewasser-Kernkraftanlage mit einer Vorrichtung 7 zur Bestimmung der Neutronenflußdichte n dargestellt. Der Sicherheitsbehälter 8 umschließt einen Reaktordruckbehälter 9, in welchem ein Reaktorkern 3 angeordnet ist. Der Sicherheitsbehälter 8 sowie der Reaktordruckbehälter 9 sind entlang einer Hauptachse 17 gerichtet. Im Reaktorkern 3 ist eine Mehrzahl von ebenfalls entlang der Hauptachse 17 gerichteten Brennelementen 4 angeordnet. Die Brennelemente 4 bilden eine Quelle 1, welche infolge von Kernspaltung Neutronen aussendet.

Zwischen einigen einander benachbarten Brennelementen 4 sind parallel zur Hauptachse 17 gerichtete Meßlanzen 13, von denen der Übersichtlichkeit halber lediglich zwei dargestellt sind, vorgesehen. Außerhalb des Reaktordruckbehälters 9 weist jede Meßlanze 13 einen Antrieb 10 zur Verschiebung eines Schubrohres 12 in der Meßlanze 13 auf. In jedem Schubrohr 12 ist an dessen Enden eine einen Neutronendetektor bildende Ionisationskammer 2, insbesondere eine sogenannte Spaltkammer, angeordnet. Durch den Antrieb 10 ist die Ionisationskammer 2 in den Reaktorkern 3 zwischen die Brennelemente 4 einfahrbar sowie, was insbesondere beim Leistungsbetrieb der Kernkraftanlage wichtig ist, aus dem Reaktorkern 3 wieder herausfahrbar.

Jede Ionisationskammer 2 ist über ein Anschlußkabel 11, gegebenenfalls über mehrere Anschlußkabel 11, mit einem Vorverstärker 14, der außerhalb des Sicherheitsbehälters 8 angeordnet ist, verbunden. Die Ionisationskammer 2 sowie der Vorverstärker 14 gehören zu einer Meßeinrichtung 5 zur Erzeugung und Übertragung eines ersten Meßsignals $S_1$ und eines zweiten Meßsignals $S_2$, die der Bildung eines eindeutig der Neutronenflußdichte n zugeordneten Weitbereichssignals W dienen.

Jeder Vorverstärker 14 ist mit einer Auswerteeinrichtung 6 verbunden, in der das Weitbereichssignal W ermittelt wird. Die Auswerteeinrichtung 6 ist mit einer Ausgabeeinheit 15 insbesondere zur Darstellung des Weitbereichssignals W beispielsweise an einem Bildschirm oder auf einem Drucker verbunden. Die Auswerteeinrichtung 6 ist darüber hinaus mit dem Reaktorsicherheitssystem 16 der Kernkraftanlage verbunden. Somit sind die Neutronenflußdichten sowie insbesondere starke Änderungen der Neutronenflußdichten, welche auf eine schnelle Änderung der Reaktorleistung schließen lassen, über die Vorrichtung 7 erfaßbar und in das Reaktorsicherheitssystem 16 eingebbar. Die aus dem Weitbereichssignal W ermittelte Neutronenflußdichte n kann somit als zuverlässiges Signal zur Auslösung einer Reaktorschnellabschaltung herangezogen werden.

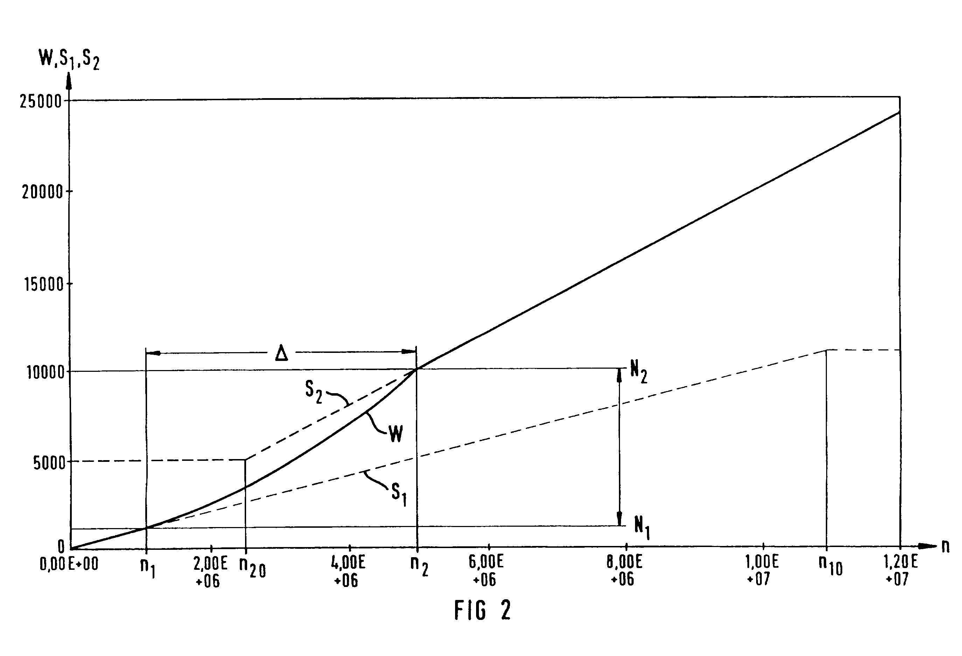

FIG 2 zeigt schematisch den Verlauf eines (durchgezogen gezeichneten) Weitbereichssignals W in Abhängigkeit der Neutronenflußdichte n einer Kernkraftanlage. Das Weitbereichssignal W ist eine bereichsweise definierte Funktion mit drei unmittelbar aneinander anschließenden Bereichen. Der erste Bereich reicht von der Neutronenflußdichte n = 0 bis zu der Neutronenflußdichte $n = n_1$. Der zweite Bereich reicht von der Neutronenflußdichte $n = n_1$ bis zu einer größeren Neutronenflußdichte $n = n_2$. Daran schließt sich der dritte Bereich an. Der zweite Bereich wird als Überlappungsbereich $\Delta$ bezeichnet. Im Überlappungsbereich $\Delta$ ist das Weitbereichssignal W eine monoton steigende Funktion, die aus einem ersten Meßsignal $S_1$ und einem zweiten Meßsignal $S_2$ gebildet wird. Das erste Meßsignal $S_1$ ist von der Neutronenflußdichte n = 0 bis zu einer Neutronenflußdichte $n = n_{10}$ eine monotone Funktion der Neutronenflußdichte n. Bei dem ersten Meßsignal $S_1$ handelt es sich vorzugsweise um ein Impulssignal der Ionisationskammer 2. Das zweite Meßsignal $S_2$ ist in einem Bereich der Neutronenflußdichte n, der bei einer zweiten Grenzflußdichte $n_{20}$ beginnt, eine monoton steigende Funktion der Neutronenflußdichte n.

Im ersten Bereich, d.h. bis zu der Neutronenflußdichte $n = n_1$, wird das Weitbereichssignal W gleich dem ersten Meßsignal $S_1$ gesetzt. Da in der Praxis die Neutronenflußdichte $n = n_1$ nicht bekannt ist, wird der umgekehrte Weg gegangen, nämlich ein der Neutronenflußdichte $n = n_1$ eindeutig zugeordneter erster Signalwert $N_1$ des ersten Meßsignals $S_1$ wird als untere Grenze des Überlappungsbereiches $\Delta$ angenommen. Ist das erste Meßsignal $S_1$ kleiner oder gleich diesem ersten Signalwert $N_1$, so wird das Weitbereichssignal W identisch dem ersten Meßsignal $S_1$ gesetzt. Analog wird das Weitbereichssignal W bei Werten der Neutronenflußdichte n größer als $n_2$ durch das zweite Meßsignal $S_2$ gebildet. Da das zweite Meßsignal $S_2$ in diesem Bereich ebenfalls eine monotone Funktion der Neutronenflußdichte n ist, ist der Neutronenflußdichte $n = n_2$ ein Signalwert $N_2$ des zweiten Meßsignals $S_2$ eindeutig zugeordnet. Der zweite Signalwert $N_2$ ist größer als der erste Signalwert $N_1$. Als Kriterium zur Gleichsetzung des Weitbereichssignals W mit dem zweiten Meßsignal $S_2$ wird demgemäß die Bedingung, daß das zweite Meßsignal $S_2$ größer als der zweite Signalwert $N_2$ ist, gewählt. Der durch die Neutronenflußdichten $n_1$ und $n_2$ gegebene Überlappungsbereich $\Delta$ ist somit eindeutig

durch den ersten Signalwert $N_1$ und den zweiten Signalwert $N_2$ definiert. Zumindest in einem Teilbereich des Überlappungsbereiches $\Delta$ sind das erste Meßsignal $S_1$ sowie das zweite Meßsignal $S_2$ jeweils eine monotone Funktion der Neutronenflußdichte n. In diesem Überlappungsbereich $\Delta$ wird das Weitbereichssignal W sowohl aus dem ersten Meßsignal $S_1$ als auch aus dem zweiten Meßsignal $S_2$ bestimmt, und zwar so, daß das Weitbereichssignal W die Summe aus dem Produkt des ersten Meßsignals $S_1$ mit einem von dem zweiten Meßsignal $S_2$ abhängenden Vorfaktor $\alpha$ und aus dem Produkt des zweiten Meßsignals $S_2$ mit einem von dem ersten Meßsignal $S_1$ abhängenden Vorfaktor $\beta$ ist. Die Vorfaktoren $\alpha$, $\beta$ sind jeweils so gewählt, daß das Weitbereichssignal W bei der Neutronenflußdichte $n_1$ mit dem ersten Signalwert $N_1$, d.h. dem ersten Meßsignal $S_1$, und bei der Neutronenflußdichte $n_2$ mit dem zweiten Signalwert $N_2$, d.h. dem zweiten Meßsignal $S_2$, übereinstimmt. Weiterhin sind die Vorfaktoren $\alpha$, $\beta$ so gewählt, daß das Weitbereichssignal W in dem Überlappungsbereich $\Delta$ eine monotone Funktion der Neutronenflußdichte n ist. Dies wird beispielsweise dadurch erreicht, daß der von dem ersten Meßsignal $S_1$ abhängende Vorfaktor $\beta$ proportional der Differenz aus dem ersten Signalwert $N_1$ und dem ersten Meßsignal $S_1$ ist. Analog ist der andere Vorfaktor $\alpha$ proportional der Differenz aus dem zweiten Meßsignal $S_2$ und dem zweiten Signalwert $N_2$. Durch diese Wahl ist bei der Neutronenflußdichte $n = n_1$ unabhängig von dem Wert des zweiten Meßsignals $S_2$ gewährleistet, daß das Weitbereichssignal W stetig in den Überlappungsbereich $\Delta$ übergeht. Gleiches gilt an der durch die Neutronenflußdichte $n = n_2$ gegebenen Bereichsgrenze. Selbst bei einer Verschiebung des Beginns der proportionalen Abhängigkeit des ersten Meßsignales $S_1$ sowie des zweiten Meßsignales $S_2$ von der Neutronenflußdichte n, beispielsweise infolge einer zeitlichen Änderung der physikalischen Bedingungen in der Ionisationskammer 2, ist mit dem Verfahren gewährleistet, daß das Weitbereichssignal W immer eine eindeutige Funktion der Neutronenflußdichte n ist.

Die Erfindung zeichnet sich durch ein Verfahren zur Bestimmung der Neutronenflußdichte, insbesondere in einem Reaktorkern einer Siedewasser- oder einer Druckwasser-Kernkraftanlage aus, bei dem in einem Überlappungsbereich ein Übergang eines Weitbereichssignals unter Einhaltung einer eindeutigen Zuordnung zur Neutronenflußdichte gewährleistet ist. Bei kleinen Neutronenflußdichten ist das Weitbereichssignal vorzugsweise identisch einem Impulssignal einer Ionisationskammer, und bei großen Neutronenflußdichten von bis zu etwa $10^{14}$ Neutronen/(cm$^2 \cdot$s) ist das Weitbereichssignal identisch mit einem Wechselstromsignal derselben Ionisationskammer. In dem Überlappungsbereich wird das Weitbereichssignal aus einer Kombination des Impulssignals und des Wechselstromsignals bestimmt, wobei die Kombination gewährleistet, daß das Weitbereichssignal an den Grenzen des Überlappungsbereichs jeweils stetig in das entsprechende Meßsignal, das Impulssignal bzw. das Wechselstromsignal, übergeht. Das Weitbereichssignal wird in dem Überlappungsbereich vorzugsweise durch die Summe aus dem Produkt des Impulssignals mit einem von dem Wechselstromsignal abhängenden Faktor und dem Produkt des Wechselstromsignals mit einem von dem Impulssignal abhängenden Faktor gebildet. Das so gebildete Weitbereichssignal ermöglicht die Erfassung der Neutronenflußdichten einer Kernkraftanlage aus dem abgeschalteten Betrieb bis hin zu dem Leistungsbetrieb mit 100 % der Nennleistung der Kernkraftanlage. Insbesondere eignet sich das Verfahren zur Bestimmung der Neutronenflußdichte im Reaktorkern einer Siedewasser-Kernkraftanlage.

**Patentansprüche**

1. Verfahren zur Bestimmung der Neutronenflußdichte (n) einer Neutronen aussendenden Quelle (1), bei dem ein erstes Meßsignal $S_1$ und zumindest ein zweites Meßsignale $S_2$, die voneinander verschieden und jeweils von der Neutronenflußdichte (n) abhängig sind, zur Bildung eines eindeutig von der Neutronenflußdichte (n) abhängenden Weitbereichssignals W verwendet werden, wobei

    a) das erste Meßsignal $S_1$ bei Werten der Neutronenflußdichte (n), die kleiner als eine erste Grenzflußdichte ($n_{10}$) sind, eine monotone Funktion der Neutronenflußdichte (n) ist,
    b) das Weitbereichssignal W bei Werten des ersten Meßsignals $S_1$, die einer Neutronenflußdichte (n) kleiner als einem unteren Grenzwert ($n_1$) entsprechen, welcher kleiner als die erste Grenzflußdichte ($n_{10}$) ist und welchem ein erster Signalwert $N_1$ des ersten Meßsignals $S_1$ zugeordnet ist, dem ersten Meßsignal $S_1$ gleichgesetzt wird gemäß der Beziehung W = $f_1(S_1)$ = $S_1$ ,
    c) das Weitbereichssignal W bei Werten des ersten Meßsignals $S_1$, die einer Neutronenflußdichte (n) größer als dem unteren Grenzwert ($n_1$) entsprechen, als Funktion $f_2$ der Meßsignale $S_1$, $S_2$ gebildet wird gemäß der Beziehung W = $f_2(S_1, S_2)$,
    d) das Weitbereichssignal W an dem unteren Grenzwert ($n_1$) stetig ist gemäß der Beziehung $f_1(N_1)$ = $f_2(N_1, S_2)$ und
    e) das Weitbereichssignal W als Grundlage der Bestimmung der Neutronenflußdichte (n) dient.

2. Verfahren nach Anspruch 1, wobei

    f) das zweite Meßsignal $S_2$ eine monotone Funktion der Neutronenflußdichte (n) ist, und zwar bei Werten der Neutronenflußdichte (n), die größer als eine zweite Grenzflußdichte

($n_{20}$) sind, wobei die zweite Grenzflußdichte ($n_{20}$) kleiner als die erste Grenzflußdichte ($n_{10}$) ist,
    g) ein Überlappungsbereich (Δ) mit dem unteren Grenzwert ($n_1$) und einem oberen Grenzwert ($n_2$) bestimmt wird, welcher obere Grenzwert ($n_2$) größer als die zweite Grenzflußdichte ($n_{20}$) und kleiner als die erste Grenzflußdichte ($n_{10}$) ist, und welchem oberen Grenzwert ($n_2$) eindeutig ein zweiter Signalwert $N_2$ des zweiten Meßsignals $S_2$ zugeordnet ist.

3. Verfahren nach Anspruch 2, bei dem die Funktion $f_2$ wie folgt gebildet ist:

$$f_2 = \alpha(S_2)^*S_1 + \beta(S_1)^*S_2$$

mit den Vorfaktoren $\alpha(S_2 = N_2)$ = 0 und $\beta(S_1 = N_1)$ = 0

4. Verfahren nach Anspruch 2 oder 3, bei dem in dem Überlappungsbereich (Δ) die Funktion $f_2$ wie folgt gebildet wird:

$$f_2 = (\alpha^* S_1 + \beta^* S_2)/(\alpha + \beta)$$

mit den Vorfaktoren $\alpha = (N_2 - S_2)/(N_2 - N_1)$ und $\beta = (S_1 - N_1)/(N_2 - N_1)$

5. Verfahren nach einem der Ansprüche 2 bis 4, bei dem für Werte des zweiten Meßsignals $S_2$, denen eine Neutronenflußdichte (n) größer als der obere Grenzwert ($n_2$) zugeordnet ist, das Weitbereichssignal W dem zweiten Meßsignal $S_2$ gleichgesetzt wird.

6. Verfahren nach Anspruch 2, bei dem mit dem zweiten Meßsignal $S_2$ und einem dritten Meßsignal, welches von der Neutronenflußdichte (n) abhängig und von dem ersten Meßsignal $S_1$ und dem zweiten Meßsignal $S_2$ verschieden ist, analog zur Bildung des Überlappungsbereichs (Δ) ein unmittelbar an diesen anschließender weiterer Überlappungsbereich bestimmt wird.

7. Verfahren nach einem der vorhergehenden Ansprüche, bei dem das Weitbereichssignal W als eine monoton steigende Funktion der Neutronenflußdichte (n) bestimmt wird.

8. Verfahren nach einem der vorhergehenden Ansprüche, bei dem als Meßsignale $S_1$, $S_2$ jeweils ein Meßsignal einer Ionisationskammer, einer Spaltkammer, einer Borkammer, eines SPN-Detektors oder eines Zählrohrs verwendet wird.

9. Verfahren nach Anspruch 8, bei dem als erstes Meßsignal $S_1$ das Impulssignal einer Ionisationskammer (2) und als zweites Meßsignal $S_2$ das Gleichstrom- oder Wechselstromsignal derselben Ionisationskammer (2) verwendet werden.

10. Verfahren nach einem der vorhergehenden Ansprüche in einer Kernkraftanlage mit einem Reaktorkern (3), welcher als Neutronen aussendende Quelle (1) eine Mehrzahl von Brennelementen (4) aufweist, wobei die Neutronenflußdichte (n) zwischen den Brennelementen (4) und/oder außerhalb des Reaktorkerns (3) bestimmt wird.

11. Vorrichtung (7) zur Bestimmung der Neutronenflußdichte (n) einer Neutronen aussendenden Quelle (1), mit einer Meßeinrichtung (5) zur Erzeugung und Übertragung eines ersten Meßsignals $S_1$ und eines zweiten Meßsignals $S_2$, die voneinander verschieden und jeweils von der Neutronenflußdichte (n) abhängig sind, wobei das erste Meßsignal $S_1$ bei Werten der Neutronenflußdichte (n), die kleiner als eine erste Grenzflußdichte ($n_{10}$) sind, eine monotone Funktion der Neutronenflußdichte (n) ist, und mit einer mit der Meßeinrichtung (5) verbindbaren Auswerteeinrichtung (6) zur Bildung eines eindeutig von der Neutronenflußdichte (n) abhängenden Weitbereichssignals W, welches der Ermittlung der Neutronenflußdichte (n) dient und

a) welches dem Meßsignal $S_1$ entspricht gemäß der Beziehung $W = f_1(S_1) = S_1$, wenn dieses Meßsignal $S_1$ Werte annimmt, die einer Neutronenflußdichte (n) kleiner als einem unteren Grenzwert ($n_1$) entsprechen, welcher kleiner als die erste Grenzflußdichte ($n_{10}$) und welchem ein erster Signalwert $N_1$ des Meßsignals $S_1$ zugeordnet ist,
b) welches eine Funktion $f_2$ der Meßsignale $S_1$ und $S_2$, ist gemäß der Beziehung $W = f_2(S_1, S_2)$, wenn das erste Meßsignal $S_1$ Werte annimmt, die einer Neutronenflußdichte (n) größer als dem unteren Grenzwert ($n_1$) entsprechen, sowie
c) welches am unteren Grenzwert ($n_1$) stetig ist gemäß der Beziehung $f_1(N_1) = f_2(N_1, S_2)$.

**Claims**

1. Method for determining the neutron flux density (n) of a neutron-emitting source (1), in which a first measurement signal $S_1$ and at least one second measurement signal $S_2$, which are different from each other and in each case dependent upon the neutron flux density (n), are used for the purpose of forming a wide-range signal W uniquely dependent upon the neutron flux density (n), wherein

a) the first measurement signal $S_1$, in the case of values of the neutron flux density (n) that are less than a first limit flux density ($n_{10}$), is a monotonic function of the neutron flux density (n),
b) the wide-range signal W, in the case of values of the first measurement signal $S_1$ that correspond to a neutron flux density (n) that is less than a lower limit value ($n_1$) which is less than the first limit flux density ($n_{10}$) and with which a first signal value $N_1$ of the first measurement signal $S_1$ is associated, is equated with the first measurement signal $S_1$ in accordance with the relationship $W = f_1(S_1) = S_1$,
c) the wide-range signal W, in the case of values of the first measurement signal $S_1$ that correspond to a neutron flux density (n) which is greater than the lower limit value ($n_1$), is formed as a function $f_2$ of the measurement signals $S_1$, $S_2$ in accordance with the relationship $W = f_2(S_1, S_2)$,
d) the wide-range signal W at the lower limit value ($n_1$) is continuous in accordance with the relationship $f_1(N_1) = f_2(N_1, S_2)$, and
e) the wide-range signal W is used as a basis for determining the neutron flux density (n).

2. Method according to claim 1, wherein

f) the second measurement signal $S_2$ is a monotonic function of the neutron flux density (n), that is, in the case of values of the neutron flux density (n) that are greater than a second limit flux density ($n_{20}$), wherein the second limit flux density ($n_{20}$) is less than the first limit flux density ($n_{10}$),
g) an overlapping region ($\Delta$) is determined with the lower limit value ($n_1$) and an upper limit value ($n_2$), which upper limit value ($n_2$) is greater than the second limit flux density ($n_{20}$) and less than the first limit flux density ($n_{10}$) and with which upper limit value ($n_2$) a second signal value $N_2$ of the second measurement signal $S_2$ is uniquely associated.

3. Method according to claim 2, wherein the function $f_2$ is formed as follows:

$$f_2 = \alpha(S_2)*S_1 + \beta(S_1)*S_2$$

with the coefficient factors $\alpha(S_2 = N_2) = 0$ and $\beta(S_1 = N_1) = 0$.

4. Method according to claim 2 or 3, wherein in the overlapping region ($\Delta$) the function $f_2$ is formed as follows:

$$f_2 = (\alpha^* S_1 + \beta^* S_2)/(\alpha + \beta)$$

with the coefficient factors $\alpha = (N_2 - S_2)/(N_2 - N_1)$ and $\beta = (S_1 - N_1)/(N_2 - N_1)$.

**5.** Method according to one of claims 2 to 4, wherein for values of the second measurement signal $S_2$, with which a neutron flux density (n) that is greater than the upper limit value ($n_2$) is associated, the wide-range signal W is equated with the second measurement signal $S_2$.

**6.** Method according to claim 2, wherein a further overlapping region immediately adjacent to the overlapping region ($\Delta$) is determined, in a manner analogous to the manner in which said overlapping region ($\Delta$) is formed, by means of the second measurement signal $S_2$ and a third measurement signal which is dependent upon the neutron flux density (n) and is different from the first measurement signal $S_1$ and the second measurement signal $S_2$.

**7.** Method according to one of the preceding claims, wherein the wide-range signal W is determined as a monotonically rising function of the neutron flux density (n).

**8.** Method according to one of the preceding claims, wherein a measurement signal of an ionization chamber, a fission chamber, a boron chamber, an SPN-detector or a counting tube is used, in each case, as the measurement signals $S_1$, $S_2$.

**9.** Method according to claim 8, wherein the pulse signal of an ionization chamber (2) is used as the first measurement signal $S_1$ and the direct-current or alternating-current signal of the same ionization chamber (2) is used as the second measurement signal $S_2$.

**10.** Method according to one of the preceding claims in a nuclear power plant having a reactor core (3) which has a plurality of fuel elements (4) as the neutron-emitting source (1), wherein the neutron flux density (n) between the fuel elements (4) and/or outside the reactor core (3) is determined.

**11.** Apparatus (7) for determining the neutron flux density (n) of a neutron-emitting source (1) having a measuring device (5) for generating and transmitting a first measurement signal $S_1$ and a second measurement signal $S_2$ which are different from each other and in each case dependent upon the neutron flux density (n), wherein the first measurement signal $S_1$, in the case of values of the neutron flux density (n) that are less than a first limit flux density ($n_{10}$), is a monotonic function of the neutron flux density (n), and having an evaluating device (6) which can be connected to the measuring device (5) for the formation of a wide-range signal W which is uniquely dependent upon the neutron flux density (n) and which is used to ascertain the neutron flux density (n) and

a) which corresponds to the measurement signal $S_1$ in accordance with the relationship W = $f_1(S_1) = S_1$, if this measurement signal $S_1$ assumes values that correspond to a neutron flux density (n) that is less than a lower limit value ($n_1$) which is less than the first limit flux density ($n_{10}$) and with which a first signal value $N_1$ of the measurement signal $S_1$ is associated,
b) which is a function $f_2$ of the measurement signals $S_1$ and $S_2$ in accordance with the relationship W = $f_2(S_1, S_2)$, if the first measurement signal $S_1$ assumes values that correspond to a neutron flux density (n) which is greater than the lower limit value ($n_1$), and also
c) which at the lower limit value ($n_1$) is continuous in accordance with the relationship

$$f_1(N_1) = f_2(N_1, S_2).$$

**Revendications**

**1.** Procédé de détermination de la densité (n) de flux de neutrons d'une source (1) émettant des neutrons, dans lequel on utilise pour former un signal (W) de région large dépendant de manière univoque de la densité (n) de flux de neutrons, un premier signal ($S_1$) de mesure et au moins un deuxième signal ($S_2$) de mesure qui sont différents l'un de l'autre et qui dépendent chacun de la densité (n) de flux de neutrons,

a) le premier signal ($S_1$) de mesure étant, pour des valeurs de la densité (n) de flux de neutrons qui sont inférieures à une première densité ($n_{10}$) de flux limite, une fonction monotone de la densité (n) de flux de neutrons,
b) le signal (W) de région large étant, pour des valeurs du premier signal ($S_1$) de mesure qui correspondent à une densité (n) de flux de neutrons inférieure à une valeur ($n_1$) limite inférieure qui est inférieure à la première densité ($n_{10}$) de flux limite et à laquelle est associée une première valeur ($n_1$) de signal du premier signal ($S_1$) de mesure, rendue égale au premier signal ($S_1$) de mesure suivant la relation W = $f_1(S_1)$ = $S_1$,
c) le signal W de région large étant, pour des valeurs du premier signal ($S_1$) de mesure qui correspondent à une densité (n) de flux de neutrons supérieure à la valeur ($n_1$) limite inférieure, formé comme fonction $f_2$ des signaux ($S_1$, $S_2$) de mesure, suivant la relation $W = f_2(S_1, S_2)$,

d) le signal ($W$) de région large à la valeur ($n_1$) limite inférieure étant constant suivant la relation $f_1(N_1) = f_2(N_1, S_2)$ et

e) le signal ($W$) de région large servant de base à la détermination de la densité ($n$) de flux de neutrons.

2. Procédé suivant la revendication 1,

f) le deuxième signal ($S_2$) de mesure étant une fonction monotone de la densité ($n$) de flux de neutrons, et cela pour des valeurs de la densité ($n$) de flux de neutrons qui sont supérieures à une deuxième densité ($n_{20}$) de flux limites, la deuxième densité ($n_1$) de flux limites étant inférieure à la première densité ($n_{10}$) de flux limites,

g) une région ($D$) de chevauchement étant déterminée par la valeur ($n_1$) limite inférieure et une valeur ($n_2$) limite supérieure, cette valeur ($n_2$) limite supérieure étant plus grande que la deuxième densité ($n_{20}$) de flux limite et inférieure à la première densité ($n_{10}$) de flux limite, et une deuxième valeur ($N_2$) de signal du deuxième signal ($S_2$) de mesure étant associée de manière univoque à cette valeur ($n_2$) limite supérieure.

3. Procédé suivant la revendication 2, dans lequel la fonction $f_2$ est formée comme suit :

$$f_2 = \alpha(S_2)*S_1 + \beta(S_1)*S_2$$

avec les préfacteurs : $\alpha(S_2 = N_2) = 0$ et $\beta(S_1 = N_1) = 0$

4. Procédé suivant la revendication 2 ou 3, dans lequel la fonction ($F_2$) est formée comme suit dans la région ($\Delta$) de chevauchement :

$$f_2 = (\alpha*S_1 + \beta*S_2)/(\alpha+\beta)$$

avec les préfacteurs $\alpha = (N_2-S_2)/(N_2-N_1)$ et $\beta = (S_1-N_1)/(N_2-N_1)$

5. Procédé suivant l'une des revendications 2 à 4, dans lequel, pour des valeurs du deuxième signal ($S_2$) de mesure auquel est associée une densité ($n$) de flux de neutrons supérieure à la valeur ($n_2$) limite supérieure, le signal ($W$) de région large est rendu égal au deuxième signal ($S_2$) de mesure.

6. Procédé suivant la revendication 2, dans lequel, de manière analogue à la formation de la région ($\Delta$) de chevauchement, une région de chevauchement supplémentaire, faisant directement suite à cette dernière, est déterminée par le deuxième signal ($S_2$) de mesure et un troisième signal de mesure qui dépend de la densité ($n$) de flux de neutrons et qui est différent du premier signal ($S_1$) de mesure et du deuxième signal ($S_2$) de mesure.

7. Procédé suivant l'une des revendications précédentes, dans lequel le signal ($W$) de région large est déterminé comme fonction monotone croissante de la densité ($n$) de flux de neutrons.

8. Procédé suivant l'une des revendication précédentes, dans lequel on utilise comme signaux ($S_1$, $S_2$) de mesure chaque fois un signal de mesure d'une chambre d'ionisation, d'une chambre de fission, d'une chambre de bore, d'un détecteur (SPN) ou d'un tube compteur.

9. Procédé suivant la revendication 8, dans lequel on utilise comme premier signal ($S_1$) de mesure le signal d'impulsion d'une chambre (2) d'ionisation et comme deuxième signal ($S_2$) de mesure le signal de courant continu ou le signal de courant alternatif de la même chambre (2) d'ionisation.

10. Procédé suivant l'une des revendications précédentes, dans une centrale nucléaire ayant un coeur (3) de réacteur qui comporte comme source (1) émettant des neutrons une pluralité d'assemblages (4) combustibles, la densité ($n$) de flux de neutrons étant déterminée entre les assemblages (4) combustibles et/ou à l'extérieur du coeur (3) de réacteur.

11. Dispositif (7) pour déterminer la densité ($n$) de flux de neutrons d'une source (1) émettant des neutrons, comportant un dispositif (5) de mesure pour produire et transmettre un premier signal ($S_1$) de mesure et un deuxième signal ($S_2$) de mesure qui sont différents l'un de l'autre et qui dépendent chacun de la densité ($n$) de flux de neutrons, le premier signal ($S_1$) de mesure étant, pour des valeurs de la densité ($n$) de flux de neutrons qui sont inférieures à une première densité ($n_{10}$) de flux limites, une fonction monotone de la densité ($n$) de flux de neutrons, et comportant un dispositif (6) d'exploitation, pouvant être relié au dispositif (5) de mesure, pour former un signal ($W$) de région large qui dépend de manière univoque de la densité ($n$) de flux de neutrons et que l'on utilise pour déterminer la densité ($n$) de flux de neutrons et

a) qui correspond au signal ($S_1$) de mesure suivant la relation $W = f_1(S_1) = S_1$ si ce signal ($S_1$) de mesure prend des valeurs qui correspondent à une densité (n) de flux de neutrons inférieure à une valeur ($n_1$) limite inférieure qui est inférieure à la première densité ($n_{10}$) de flux limite et à laquelle est associée une première valeur ($S_1$) de signal du signal ($S_1$) de mesure,

b) qui est une fonction $f_2$ des signaux ($S_1$ et $S_2$) de mesure suivant la relation $W = f_2(S_1, S_2)$ si le premier signal ($S_1$) de mesure prend des valeurs qui correspondent à une densité (n) de flux de neutrons supérieure à la valeur ($n_1$) limite inférieure, et

c) qui est constant à la valeur ($n_1$) limite inférieure suivant la relation $f_1(N_1) = f_2(N_1, S_2)$.

FIG 1

FIG 2

EP 0 868 727 B1